Europäisches Patentamt

(19) European Patent Office

Office européen des brevets

(11) Publication number : **0 540 079 B1**

(12) **EUROPEAN PATENT SPECIFICATION**

(45) Date of publication of patent specification :
20.12.95 Bulletin 95/51

(51) Int. Cl.⁶ : **G05D 7/06, G05B 5/01**

(21) Application number : **92203140.6**

(22) Date of filing : **13.10.92**

(54) **Actuator control of a flow control valve by its characteristic curve**

(30) Priority : **17.10.91 IT MI912746**

(43) Date of publication of application :
**05.05.93 Bulletin 93/18**

(45) Publication of the grant of the patent :
**20.12.95 Bulletin 95/51**

(84) Designated Contracting States :
**DE FR GB SE**

(56) References cited :
**EP-A- 0 462 432**
**CH-A- 638 279**
**DE-A- 3 931 962**
**DE-A- 4 019 503**
**FR-A- 2 609 519**

(56) References cited :
**GB-A- 2 123 983**
**US-A- 4 277 832**
**PATENT ABSTRACTS OF JAPAN vol. 4, no. 80**
**(M-015)10 June 1980; & JP-A-55040363**

(73) Proprietor : **NUOVOPIGNONE INDUSTRIE
MECCANICHE E FONDERIA S.p.A.**
**Via F. Matteucci 2**
**I-50127 Florence (IT)**

(72) Inventor : **Bergamini, Giorgio**
**Via C. Rosalba 46/F**
**I-70100 Bari (IT)**

(74) Representative : **Fusina, Gerolamo et al**
**Ing. Barzanò & Zanardo Milano S.p.A,**
**Via Borgonuovo, 10**
**I-20121 Milano (IT)**

## Description

This invention relates to a new system for controlling the actuator of a flow control valve which does not use a conventional controller requiring appropriate setting of operational parameters variable from one operating condition to another, and hence results in prompt and precise flow control without hunting or delay, independently of operating conditions.

As is known from the state of the art, valve flow control is usually effected by controlling the valve actuator with a positioning command produced by a control unit generally of P.I.D. type, which operates on the error between the set flow value and the effective flow value $Q_m$ measured traditionally by a differential pressure sensor connected to the two terminals of an orifice plate and a square root extractor, using the formula $Q_m = AK\sqrt{\Delta p}$, where A is the cross-sectional area of the sized orifice of the plate, K is a characteristic constant of the plate and $\Delta p$ is the pressure drop across the orifice plate.

This known control system suffers however from drawbacks, the main drawback being the presence of the P.I.D. controller, which besides generating hunting of the variable (flow rate) to be controlled or delay in adjusting the flow rate to the set value if the set operating parameters do not already coincide, also requires continuous adjustment of said operating parameters as the dynamic response of the process varies. A further drawback is the narrow range within which the flow rate can be controlled, this being determined by the operational limits of the orifice plate, the presence, installation and connection of which represents a further drawback which influences the overall cost and size of the system.

These latter drawbacks are obviated in another known system in which the effective flow rate $Q_m$ is determined again by measuring a pressure difference $\Delta p$, but in this case that across the control valve itself, using the characteristic curve for the valve which gives the values of $C_v$ as a function of the position of the valve plug when a certain pressure drop $\Delta p_o$ is present across it, $C_v$ being defined as the flow rate through the valve with a standard constant pressure drop $\Delta p_o$ across it. More specifically, the flow rate $Q_m$ is now determined by a logic unit the inputs of which receive a value representing the pressure drop across the valve and a value representing the position of the valve plug respectively, the unit then calculating the value from the relationship:

$$Q_m = \frac{C_v \sqrt{\Delta p}}{\sqrt{\Delta p_o}} \quad (1)$$

where the value of $C_v$ is taken from said characteristic curve at the said value representing the valve plug position. Such value of $Q_m$ is then compared with the required or set flow rate by a control unit of P.I.D. type, which provides at its output a new positioning command for the valve actuator.

However, this second system still has all the drawbacks relative to the presence of the P.I.D. controller.

A further prior art system which is relevant to the present invention is disclosed in GB-A-2-123-983.

The object of the present invention is to obviate the aforesaid drawbacks by providing a system for controlling the actuator of a flow control valve which acts directly without hunting or delay, and in particular independently of the operating conditions.

This is substantially attained in that the positioning command for the actuator of the flow control valve is obtained from the valve characteristic curve at that $C_v$ value corresponding to the set flow rate, said curve not varying as the valve operating conditions vary.

In other words, as the flow rate Q through the valve and its $C_v$ are related by a relationship of type (1), then:

$$C_v = \frac{\sqrt{\Delta p_o . Q}}{\sqrt{\Delta p}}$$

For each set flow rate $Q_s$ there is therefore a precise value $C_{vs}$ which can be easily calculated from said relationship, knowing the pressure drop $\Delta p$ across the valve; knowing this value $C_{vs}$, the specific value of the positioning command to be fed to the actuator to achieve a flow rate $Q_s$ through the valve can be immediately obtained from the valve characteristic curve.

In this manner the set flow rate is no longer achieved by comparison by means of a P.I.D. controller, but instead is achieved directly.

Hence, the system for controlling the actuator of a flow control valve, comprising a differential pressure sensor measuring the pressure drop across said valve and an operational unit for providing a positioning command to said actuator, is characterised according to the present invention in that said operational unit consists of a first functional block, to the inputs of which there are fed the differential pressure value $\Delta p$ measured by said sensor and the set point flow rate value $Q_s$, said first block executing the relationship $\sqrt{\Delta p_o} . Q_s / \sqrt{\Delta p} = C_{vs}$, where $\Delta p_o$ is the standard constant pressure drop across the valve with which the valve characteristic curve of valve flow Cv against valve plug position S was determined, the value Cvs being output from the said first functional block to a second functional block which uses the said characteristic curve and the said value Cvs to obtain the corresponding value of positioning command Ss for said plug, said command being fed to said actuator.

The invention will be more apparent with reference to the accompanying drawing, which illustrates a preferred embodiment thereof by way of non-limiting example in that technical, constructional or applicational modifications can be made thereto. For example, instead of controlling a liquid-phase flow rate, for which the aforegoing is valid, a gaseous-phase flow rate could be controlled, in which case it is necessary merely to replace said first functional block, which converts the set flow rate value $Q_s$ into a corresponding $C_{vs}$ value, with a new functional block which effects said conversion for gas, ie by also taking into account the pressure, temperature and type of gas in accordance with standard known relationships.

In said drawing:

Figure 1 shows a block diagram of the system for controlling the actuator of a flow control valve, formed in accordance with the invention;

Figure 2 shows the characteristic curve of said valve, ie the variation in the valve $C_v$ with the valve plug position for a constant pressure drop $\Delta p_o$ across the valve.

In the figures, the reference numeral 1 indicates the actuator of the flow control valve 2, across which there is connected a sensor 3 for measuring the pressure drop $\Delta p$ across said valve. The output of said sensor 3 is connected via the connection 4 to the input of a first functional block 5, to which the set flow rate value $Q_s$ is also fed.

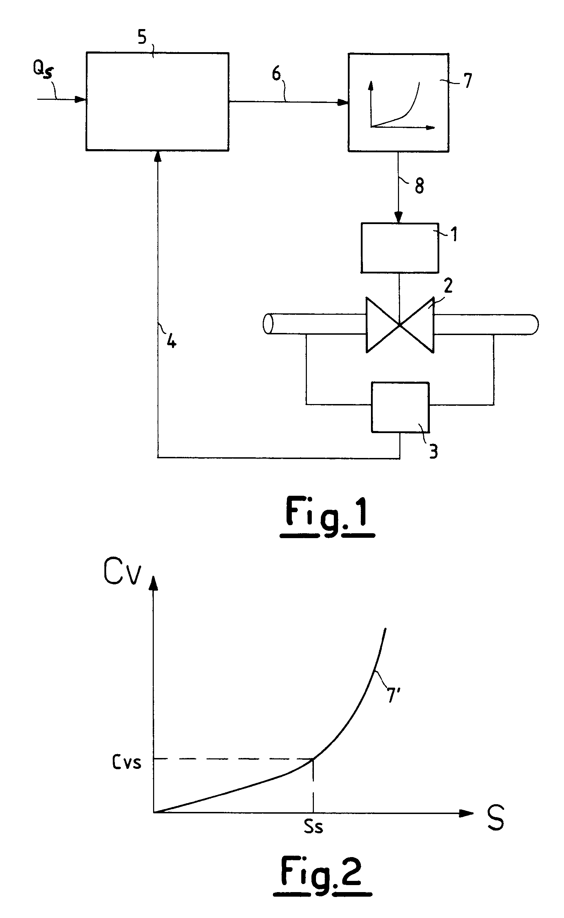

Said functional block 5 processes said input values in accordance with the relationship $\sqrt{\Delta p_o} . Q_s / \sqrt{\Delta p}$, where $\Delta p_o$ represents the constant pressure drop across the valve, to determine its characteristic curve 7' shown in Figure 2, ie the variation in the valve $C_v$ with the valve plug position s.

At the output 6 of the functional block 5 there is therefore a value $C_{vs}$ corresponding to the flow rate $Q_s$ for the pressure drop $\Delta p$, this value then being fed to the second functional block 7 in which the valve characteristic curve 7' is stored, so that at the output 8 of said block 7 there is a value $s_s$ corresponding to said value $C_{vs}$ (see specifically Figure 2), ie substantially the position which the valve actuator has to assume to ensure that the value $C_{vs}$ and hence the flow rate $Q_s$ are achieved. The actuator 1 of the valve 2 is then positioned using said value $s_s$.

## Claims

1. A system for controlling the actuator (1) of a flow control valve (2), comprising a differential pressure sensor (3) measuring the pressure drop across said valve (2) and an operational unit for providing a positioning command (8) to said actuator (1), characterised in that said operational unit consists of a first functional block (5), to the inputs of which there are fed the differential pressure value $\Delta p$ measured by said sensor (3) and the set point flow rate value $Q_s$, said first block

executing the relationship $\sqrt{\Delta p_o} . Q_s / \sqrt{\Delta p} = C_{vs}$, where $\Delta p_o$ is the standard constant pressure drop across the valve with which the valve characteristic curve of valve flow Cv against valve plug position S was determined, the value Cvs being output from the said first functional block (5) to a second functional block (7) which uses the said characteristic curve and the said value Cvs to obtain the corresponding value of positioning command Ss for said plug, said command being fed to said actuator.

## Patentansprüche

1. System zur Steuerung des Stellgliedes (1) eines Durchflußsteuerventils (2) mit einem Sensor (3) zum Ermitteln einer Druckdifferenz, der den Druckabfall über das Ventil (2) mißt, und einer Operationseinheit zur Abgabe eines Positionierbefehls (8) an das Stellglied (1),
   dadurch gekennzeichnet,
   daß die Operationseinheit aus einem ersten Funktionsblock (5) besteht, an dessen Eingänge der Differenzdruckwert $\Delta p$ eingegeben wird, der durch den Sensor (3) gemessen wird, sowie der Einstellpunkt des Wertes der Durchflußrate $Q_s$ wobei dieser erste Block das Verhältnis $\sqrt{\Delta p_0} * Q_s / \sqrt{\Delta p} = C_{vs}$ ausführt, wobei $\Delta p_o$ der konstante Standartdruckabfall über das Ventil ist, mit dem die Ventilkennlinie des Ventilstroms $C_v$ gegen die Ventilstückstellung S bestimmt wurde, wobei der Wert $C_{vs}$ von dem ersten Funktionsblock (5) an einen zweiten Funktionsblock (7) gegeben wird, der die Kennlinie und den Wert $C_{vs}$ verwendet, um den entsprechenden Wert des Positionsbefehls $S_s$ des Ventilstücks zu erhalten, wobei dieser Befehl an das Stellglied gegeben wird.

## Revendications

1. Système pour commander l'actionneur (1) d'une vanne (2) de réglage de débit comprenant un capteur (3) de pression différentielle mesurant la chute de pression dans ladite vanne (2) et un dispositif opérationnel pour fournir une instruction de positionnement (8) audit actionneur (1), caractérisé en ce que ledit dispositif opérationnel consiste en un premier bloc fonctionnel (5), aux entrées duquel sont appliquées la valeur de pression différentielle $\Delta p$ mesurée par ledit capteur (3) et la valeur $Q_s$ de débit de point de consigne, ledit premier bloc calculant la relation $\sqrt{\Delta p_0} . Qs / \sqrt{\Delta p} = C_{vs}$. où $\Delta p_o$ est la chute de pression constante normalisée ayant lieu dans la vanne et avec laquelle la courbe caractéristique du débit Cv de la vanne en fonction de la position de l'obturateur S à été déterminée, la valeur Cvs étant émise par ledit premier bloc fonctionnel (5) vers un second bloc fonctionnel (7) qui utilise ladite courbe caractéristique et ladite valeur Cvs pour obtenir la valeur correspondante d'instruction de positionnement Ss pour ledit obturateur, ladite instruction étant fournie audit actionneur.

## Fig.1

## Fig.2